# EUROPÄISCHE PATENTSCHRIFT

(11) **EP 1 081 463 B1**
(45) Veröffentlichungstag und Bekanntmachung des Hinweises auf die Patenterteilung: **28.11.2007**
(21) Anmeldenummer: 00115373.3
(22) Anmeldetag: 15.07.2000
(51) Int. Cl.: G01D 5/347

(54) **Wegmesssystem**
Displacement measuring system
Dispositif de mesure de déplacements

(30) Priorität: 03.09.1999 DE 19943729
(43) Veröffentlichungstag der Anmeldung: 07.03.2001
(73) Patentinhaber: Dr. Johannes Heidenhain GmbH, 83292 Traunreut (DE)
(72) Erfinder: Niedermeier, Peter, 83308 Trostberg (DE); Tondorf, Sebastian, 83329 Waging am See (DE)

(56) Entgegenhaltungen:
- DE-A- 3 530 776
- DE-A- 4 306 951
- DE-U- 9 317 437

## Beschreibung

Die Erfindung betrifft ein Wegmesssystem zur Bestimmung der Lage zweier relativ zueinander beweglicher Bauteile nach dem Oberbegriff des Anspruchs 1.

Ein solches Wegmesssystem dient insbesondere zur Bestimmung der Lage zweier relativ zueinander beweglicher Maschinenteile und umfasst eine in einer Messrichtung angeordnete Messteilung, einen die Messteilung tragenden Trägerkörper, der an einem der beiden Maschinenteile befestigt ist, und eine die Messteilung abtastende Abtasteinrichtung, die dem zweiten der beiden Maschinenteile zugeordnet und in definiertem Abstand von der Messteilung geführt ist.

Bei solchen Wegmesssystemen muss eine definierte Führung der Abtasteinrichtung entlang zur Messteilung gewährleistet sein, um eine zuverlässige Bestimmung der relativen Lage der beiden zueinander beweglichen Maschinenteile zu ermöglichen. Bei Werkzeugmaschinen, bei denen sich die beiden Maschinenteile, deren relative Lage bestimmt werden soll, nicht ausschließlich parallel zueinander entlang der Erstreckungsrichtung der Messteilung bewegen, sondern bei denen auch Relativbewegungen der Maschinenteile quer zu dieser Richtung auftreten, müssen daher zusätzliche Maßnahmen getroffen werden, damit eine definierte Führung der Abtasteinrichtung entlang der Messteilung gewährleistet ist. Dies gilt beispielsweise für Pressmaschinen, bei deren Betrieb erhebliche Druck- und Biegekräfte auftreten, die Bewegungen des Stempels quer zur Pressrichtung verursachen.

Zur Behebung dieses Problems ist es aus der WO 98/23924 bekannt, auf dem Trägerkörper der Messteilung eine Führungseinrichtung für die Abtasteinrichtung vorzusehen und die Abtasteinrichtung über eine Koppeleinheit, die eine Koppelstange und zwei Kugelgelenke umfasst, gelenkig mit dem zweiten Maschinenteil zu verbinden. Hierdurch wird gewährleistet, dass sich die Abtasteinrichtung (entlang der hierfür auf dem Trägerkörper der Messteilung vorgesehenen Führungseinrichtung) auch dann exakt parallel zu der Messteilung bewegen kann, wenn die beiden Maschinenteile, deren relative Lage bestimmt werden soll, Bewegungen quer zur Erstreckungsrichtung der Messteilung ausführen. Denn solche Bewegungen werden durch die gelenkige Verbindung der Abtasteinrichtung mit dem zweiten Maschinenteil kompensiert.

Ein weiteres Messsystem dieser Art ist aus der DE 43 06 951 A1 bekannt, wobei hier die Koppelstange zusätzlich eine Längenverstelleinrichtung aufweist, mit der die Länge der Koppelstange einstellbar ist und die durch eine Spindelverstellung bestehend aus einem Gewindebolzen und einer Gewindehülse gebildet wird. Mittels dieser Längenverstelleinrichtung kann die Länge der Koppelstange an die relative Lage des zweiten Maschinenteiles bezüglich der Abtasteinrichtung beim Einbau des Wegmesssystems in eine Werkzeugmaschine angepasst werden.

Der Erfindung liegt die Aufgabe zugrunde, ein Wegmesssystem der eingangs genannten Art hinsichtlich der Einstellbarkeit der Länge des Koppelelementes zu verbessern.

Diese Aufgabe wird erfindungsgemäß durch die Schaffung eines Wegmesssystems mit den Merkmalen des Patentanspruchs 1 gelöst.

Danach ist vorgesehen, dass die Längenverstelleinrichtung durch eine Schiebeführung gebildet wird, die zwei entlang der Erstreckungsrichtung des Koppelelementes zueinander verschiebliche Führungselemente sowie Mittel zum Fixieren der beiden Führungselemente in einer zuvor durch Verschieben eingestellten Position aufweist.

Die erfindungsgemäße Lösung hat den Vorteil, dass die zur Einstellung der Länge des Koppelelementes vorgesehene Schiebeführung wesentlich kompakter aufgebaut und kostengünstiger hergestellt werden kann als die bekannte, als Spindelverstellung ausgebildete Längenverstelleinrichtung. Ferner lassen sich die einzelnen Bauelemente einer Schiebeführung ohne weiteres austauschen und an Koppelelemente unterschiedlicher Dicke und Länge anpassen.

Die Fixierung der beiden Führungselemente zueinander nach der Einstellung der Länge des Koppelelementes erfolgt vorzugsweise durch eine Klemmverbindung; es ist aber auch eine formschlüssige oder sonstige kraftschlüssige Verriegelung möglich.

Hierzu kann die Schiebeführung ein im Wesentlichen starres Klemmelement umfassen, z.B. in Form einer Klemmschraube oder eines Exzenters, das zur Herstellung der Klemmverbindung auf eines der Führungselemente einwirkt.

Alternativ kann die Schiebeführung einen elastisch ausgebildeten Abschnitt sowie Mittel zum Deformieren dieses Abschnittes zur Herstellung der Klemmverbindung, z.B. in Form einer Stellschraube oder eines Exzenters, umfassen. Das heißt ein Klemmelement in Form einer Stellschraube oder eines Exzenters wirkt auf den elastisch deformierbaren Abschnitt ein, um so indirekt die Klemmverbindung herzustellen.

Der elastisch deformierbare Abschnitt kann Bestandteil eines der beiden Führungselemente sein, das das andere Führungselement mit diesem Abschnitt umgreift. In einer bevorzugten Ausführungsform weist hierbei das eine Führungselement einen Durchgang auf, in dem das andere Führungselement geführt ist, und ist mit einem sich bis zu dem Durchgang erstreckendem Schlitz versehen, so dass der Querschnitt des Durchganges veränderbar ist und hierdurch die gewünschte Klemmwirkung erzeugt werden kann. Bei dem in dem Durchgang geführten Führungselement kann es sich insbesondere um einen Abschnitt des Koppelelementes selbst handeln.

Das Koppelelement kann in einfacher Weise durch eine Koppelstange gebildet werden, die zur Schaffung einer gelenkigen Verbindung zwischen der Abtasteinrichtung und dem zweiten Bauteil biegbar ausgebildet ist und beispielsweise aus Federstahl besteht.

In einer Weiterbildung der Erfindung weist eines der Führungselemente Markierungen auf, anhand derer die Lage der beiden Führungselemente zueinander bestimmbar ist. Mit diesen Markierungen kann zum einen sichergestellt werden, dass die effektive Länge des Koppelelementes, also der Abstand zwischen der Abtasteinrichtung und dem zweiten Bauteil entlang der Erstreckungsrichtung des Koppelelementes stets groß genug ist, um im Fall eines biegbar ausgebildeten Koppelelementes eine hinreichend gelenkige Verbindung der Abtasteinrichtung mit dem zweiten Bauteil zu gewährleisten. Zum anderen soll verhindert werden, dass die beiden Führungselemente der Schiebeführung so weit gegeneinander verschoben werden, dass sie nicht mehr hinreichend miteinander in Kontakt stehen und daher auch nicht mehr über eine Klemmverbindung oder dergleichen aneinander befestigt werden können. Anstelle von Markierungen können an den Führungselementen zu den genannten Zwecken auch Anschläge vorgesehen sein, durch die der Verschiebeweg der beiden Führungselemente zueinander begrenzt wird.

Die Schiebeführung kann sowohl an dem der Abtasteinrichtung als auch an dem zweiten Bauteil zugewandten Endes des Koppelelementes angeordnet sein, und es kann auch an beiden Enden des Koppelelementes jeweils eine Schiebeführung vorhanden sein. Ferner ist es möglich, die Schiebeführung im mittleren Bereich des Koppelelementes anzuordnen. Die Schiebeführung ist jedoch bevorzugt an einem der Endabschnitte des Koppelelementes vorgesehen, um dessen Biegsamkeit nicht zu beeinträchtigen und somit die Herstellung einer einfachen gelenkigen Verbindung zwischen der Abtasteinrichtung und dem zweiten Bauteil zu ermöglichen.

Weitere Vorteile der Erfindung werden bei der nachfolgenden Beschreibung eines Ausführungsbeispiels anhand der Figuren deutlich werden.

Es zeigen:
- Figur 1a: eine Draufsicht auf ein Wegmesssystem einer Abtasteinrichtung, die über eine Koppelstange gelenkig mit einem Maschinenteil verbindbar ist;
- Figur 1b: eine Seitenansicht des Wegmesssystems aus Figur 1a ohne Koppelstange;
- Figur 2a: einen Längsschnitt durch ein Führungselement einer Schiebeführung, mittels der die effektive Länge der in Figur 1a dargestellten Koppelstange einstellbar ist;
- Figur 2b: eine Draufsicht auf das in Figur 2a in einem Längsschnitt dargestellte Führungselement;
- Figur 2c: einen Querschnitt entlang der Linie IIc in Figur 2b;
- Figur 2d: einen Querschnitt entlang der Linie IId in Figur 2b;
- Figur 2e, 2f: zwei weitere Ansichten des Führungselementes.

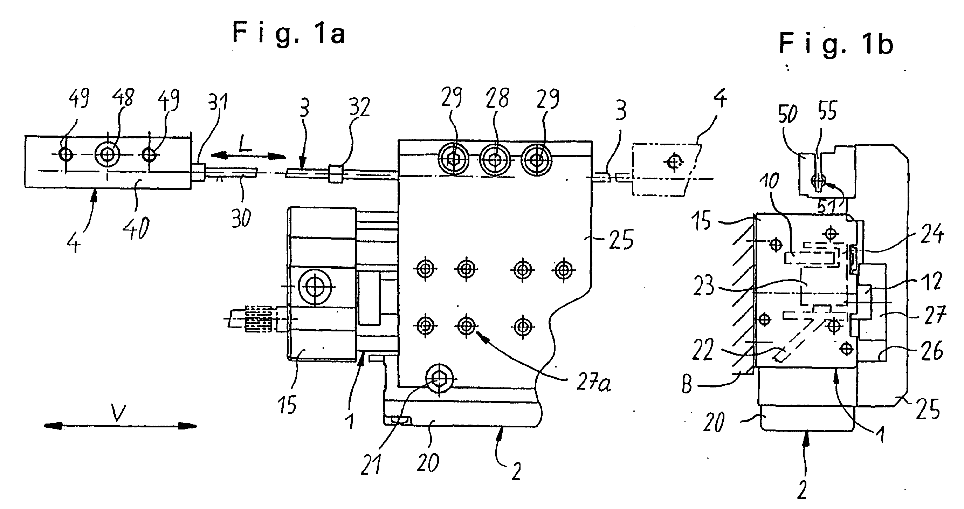

In den Figuren 1a und 1b ist in zwei verschiedenen Ansichten ein Ausschnitt eines Wegmesssystems (Längenmesssystems) dargestellt, das zur Bestimmung der Lage zweier relativ entlang einer Messrichtung V zueinander beweglicher Maschinenbauteile geeignet ist.

Das Wegmesssystem umfasst einen Trägerkörper 1 in Form eines Hohlprofils, das insbesondere durch ein Strangpressprofil gebildet sein kann und in dem sich ein mit einer längserstreckten Messteilung versehener Maßstab 10 entlang der Messrichtung V erstreckt. Der Trägerkörper 1 ist an seinen beiden seitlichen Endabschnitten durch je ein Abschlusselement 15 abgedeckt, von denen in den Figuren 1a und 1b lediglich eines dargestellt ist.

Wie in Figur 1b erkennbar, ist der Trägerkörper 1 mit einem ersten, bei Position B angedeuteten Maschinenteil einer Werkzeugmaschine verbunden. Der Maßstab 10 verläuft dabei parallel zu der Erstreckungsrichtung dieses Maschinenteiles.

An dem Trägerkörper 1 ist eine Abtasteinrichtung 2 geführt, die einem zweiten, bezüglich des ersten Maschinenteiles bewegbaren Maschinenteil zugeordnet ist. Wie anhand Figur 1b erkennbar ist, umfasst die Abtasteinrichtung 2 einen Abtastwagen 23, der bezüglich des Trägerkörpers 1 entlang der Messrichtung V verschiebbar ist und der einen Abtastkopf 24 zur Abtastung der Messteilung des Maßstabes 10 trägt. Zur Abtastung eines optischen Maßstabes 10 im Durchlichtverfahren kann der Abtastkopf 24 z.B. eine Lichtquelle, ein Linsensystem und der Lichtquelle zugeordnete Photoelemente umfassen. Die vorliegende Erfindung ist jedoch unabhängig davon, welches physikalische Prinzip der Abtastung des Maßstabes 10 mittels des Abtastkopfes 24 zugrunde liegt.

Über einen Mitnehmer 22 ist der Abtastwagen 23 entweder starr oder nur in Messrichtung V starr (spielfrei) und quer dazu über eine angefederte Kupplung mit einem außerhalb der Hohlkammer des Trägerkörpers 1 angeordneten Montagefuß 20 verbunden. Im letztgenannten Fall ist der Abtastwagen 23 zusätzlich am Trägerkörper 1 und/oder am Maßstab 10 geführt. Die quer zur Messrichtung V spielbehaftete Verbindung zwischen Mitnehmer 22 und Abtastwagen 23 stellt dann sicher, dass eventuelle Querbewegungen des Montagefußes 20 ausgeglichen und nicht auf den Abtastwagen 23 übertragen werden.

Der Montagefuß 20 dient üblicherweise zur unmittelbaren Befestigung der Abtasteinrichtung 2 an dem zweiten, beweglichen Maschinenteil. Im vorliegenden Fall ist jedoch an dem Montagefuß 20 mittels geeigneter Befestigungsmittel 21 ein Verbindungsstück in Form einer Verbindungsplatte 25 befestigt, die den Trägerkörper 1 umgreift und die in einer Führungseinrichtung 12 des Trägerkörpers 1 in einem definierten Abstand von der Messteilung parallel zu dieser geführt ist. Die Führungseinrichtung 12 ist auf einer äußeren Oberfläche des Trägerkörpers 1 angeordnet und befestigt, die senkrecht zu der den Montagefuß 20 aufnehmenden Oberfläche des Trägerkörpers 1 orientiert ist und greift in einen U-förmigen Gleiter 27 ein, der durch geeignete Befestigungselemente 27a in einer dem Trägerkörper 1 zugewandten Ausnehmung 26 der Verbindungsplatte 25 befestigt ist und der mit der Führungseinrichtung 12 z.B. nach Art einer Kugelumlaufführung oder einer Gleitführung zusammenwirkt. Durch diese präzise Führung der Abtasteinrichtung 2 an dem Trägerkörper 1 über den Montagefuß 20, die Verbindungsplatte 25 und die zugeordnete Führungseinrichtung 12 wird eine definierte Führung der Abtasteinrichtung 2 entlang des Maßstabes 10 erreicht, unabhängig davon, ob sich die beiden Maschinenteile, deren relative Lage mit dem Wegmesssystem bestimmt werden soll, im Betrieb der Werkzeugmaschine tatsächlich exakt parallel zueinander bewegen.

Zur gelenkigen Kopplung der Verbindungsplatte 25 an das zweite Maschinenteil ist ein Koppelelement in Form einer Koppelstange 3 vorgesehen, die sich von der Verbindungsplatte 25 entlang einer im wesentlichen in Messrichtung V verlaufenden Richtung L zu einem Befestigungsstück 4 erstreckt, das Befestigungsöffnungen 49 mit einem Innengewinde zur Herstellung einer Schraubverbindung mit dem zweiten Maschinenteil aufweist. Die Koppelstange 3 besteht vorzugsweise aus Federstahl und ist längssteif, aber hinreichend biegbar, um bei einer präzisen Führung der Abtasteinrichtung 2 parallel zu dem Maßstab 10 gleichzeitig Bewegungen der beiden Maschinenteile relativ zueinander quer zur Erstreckungsrichtung des Maßstabes 10 (quer zur Messrichtung V) zu gestatten, deren Amplitude über das hinausgeht, was mit der oben beschriebenen angefederten Kupplung zwischen Mitnehmer 22 und Abtastwagen 23 ausgeglichen werden kann.

Um den Einbau des in den Figuren 1a und 1b dargestellten Wegmesssystems in eine Werkzeugmaschine zu erleichtern und insbesondere Schwankungen hinsichtlich der Lage des zweiten Maschinenteils relativ zu der Verbindungsplatte 25 beim Einbau des Wegmesssystems ausgleichen zu können (Feinjustage), lässt sich die effektive Länge der Koppelstange 3 verändern. Unter der effektiven Länge der Koppelstange 3 wird dabei die Länge der Koppelstange 3 zwischen der Verbindungsplatte 25 und dem Befestigungsstück 4 verstanden.

Zur Einstellung der effektiven Länge der Koppelstange 3 ist eine Schiebeführung vorgesehen, die zwei in Erstreckungsrichtung der Koppelstange 3 (die im Wesentlichen der Messrichtung V entspricht) zueinander bewegliche Führungselemente umfasst, von denen das eine durch die Koppelstange 3 selbst gebildet wird und das andere Bestandteil des Befestigungsstückes 4 ist.

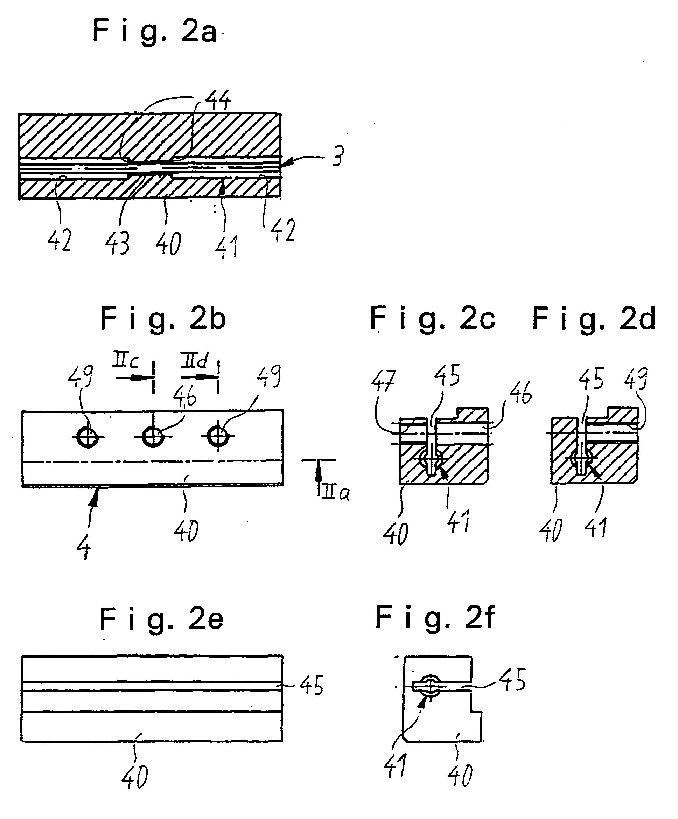

Die Gestaltung des in das Befestigungsstück 4 integrierten Führungselementes 40 wird nachfolgend anhand der Figuren 1a und 1b und der detaillierten Darstellung in den Figuren 2a bis 2f näher beschrieben.

Das Führungselement 40 ist ein einstückiger Bestandteil des Befestigungsstückes 4 und umfasst einen Durchgang 41, der sich in Längsrichtung durch das Befestigungsstück 4 erstreckt und zur Aufnahme der Koppelstange 3 vorgesehen ist. Der Durchgang 41 ist hohlzylindrisch ausgebildet und weist in seinem mittleren Bereich eine Einschnürung 43 auf, das heißt der Innendurchmesser des Durchganges 41 ist dort kleiner als in den darin anschließenden äußeren Abschnitten 42. Der Durchmesser im Bereich der Einschnürung 43 ist so gewählt, dass die Koppelstange 3 dort im Wesentlichen spielfrei aufgenommen werden kann.

Von dem Durchgang 41 ausgehend erstreckt sich ein Schlitz 45 durch das Führungselement 40 bis zu einem seitlichen Rand des Führungselementes. Das Führungselement 40 ist hierdurch im Bereich des Durchganges 41 elastisch deformierbar.

In dem Führungselement 40 erstreckt sich quer zu dem Schlitz 45 eine Bohrung 46, die in den Schlitz 45 einmündet und auf der anderen Seite des Schlitzes 45 in eine Gewindebohrung 47 übergeht. Durch Anziehen einer Stellschraube 48 (vergleiche Figur 1a), die in die Bohrung 46 eingeführt ist und deren Gewinde mit dem Innengewinde der Gewindebohrung 47 zusammenwirkt, lässt sich der Querschnitt des Durchganges 41 verändern und so eine Klemmverbindung zwischen dem Führungselement 40 und einer in dessen Durchgang 41 eingeführten Koppelstange 3 herstellen. Umgekehrt kann durch Lösen der Stellschraube die Koppelstange wieder freigegeben werden.

Ist die Koppelstange 3 freigegeben, so kann das Führungselement 40 - und damit das Befestigungsstück 4 - auf der Koppelstange 3 verschoben werden, wodurch die effektive Länge der Koppelstange 3 verändert wird; denn durch eine Verschiebung des Befestigungsstückes 4 auf der Koppelstange 3 verändert sich der Abstand zwischen der Verbindungsplatte 25 und dem Befestigungsstück 4.

In entsprechender Weise ist die Koppelstange 3 mit ihrem anderen Ende in einem Durchgang 51 eines Führungselementes 50 geführt, das über Befestigungsschrauben 29 an einem Endabschnitt der Verbindungsplatte 25 befestigt ist. Auch dieses Führungselement 50 weist einen Schlitz 55 auf, der sich von dem Durchgang 51 zu einem seitlichen Rand des Führungselementes 50 erstreckt und der ein Einklemmen der Koppelstange 3 in dem Durchgang 51 mittels einer Stellschraube 28 ermöglicht. Die effektive Länge der Koppelstange 3 lässt sich somit nicht nur an der zuvor beschriebenen ersten Schiebeführung 3, 40 im Bereich des Befestigungsstückes 4 sondern auch an einer zweiten Schiebeführung 3, 50 im Bereich der Verbindungsplatte 25 verändern.

Zudem eröffnet die der Verbindungsplatte 25 zugeordnete Schiebeführung 3, 50 zwei unterschiedliche Möglichkeiten der Anordnung des Befestigungsstückes 4 bezüglich der Abtasteinrichtung 2. Je nachdem entlang welcher Richtung die Koppelstange 3 in das Führungselement 50 der Verbindungsplatte 25 eingeführt ist, kann das Befestigungsstück 4 in zwei unterschiedlichen, einander gegenüberliegenden Positionen bezüglich der Abtasteinrichtung 2 angeordnet sein, wie in Figur 1a in gestrichelten Linien durch die Darstellung der Koppelstange 3 und des Befestigungsstückes 4 in einer zweiten möglichen Position angedeutet ist.

Die Koppelstange 3 weist zwei Erhebungen in Form von Ringen 31, 32 auf, deren Durchmesser größer ist als der Innendurchmesser der äußeren Abschnitte 42 des Durchganges 41 in dem Führungselement 40 des Befestigungsstückes 4 sowie des entsprechenden Durchganges in dem Führungselement 50 der Verbindungsplatte 25. Hierdurch wird der Verschiebeweg der Koppelstange 3 bezüglich der beiden Führungselemente 40, 50 begrenzt und zwar derart, dass die Länge der Koppelstange zwischen dem Befestigungsstück 4 und der Verbindungsplatte 25 in jedem Fall groß genug ist, um eine hinreichende Biegsamkeit der Koppelstange 3 zu gewährleisten. Der minimale Abstand des Befestigungsstückes 4 von der Verbindungsplatte 25 ist dabei durch den Abstand der beiden Ringe 31, 32 festgelegt, die zwischen sich einen hinreichend biegsamen mittleren Abschnitt 30 der Koppelstange 3 aufnehmen.

Anstelle der Ringe 31, 32 könnten an entsprechenden Stellen auf der Koppelstange auch Markierungen angebracht sein, anhand derer die Position der Koppelstange 3 in dem zugeordneten Führungselement 40 bzw. 50 ablesbar ist.

Weitere Markierungen können vorgesehen sein, um zu verhindern, dass die Koppelstange 3 und das zugeordnete Führungselement 40 bzw. 50 so weit gegeneinander verschoben werden, dass die Koppelstange in dem jeweiligen Führungselement 40, 50 nicht mehr sicher gehalten werden kann. Bei dem in das Befestigungsstück 4 integrierten Führungselement 40 ist das z.B. dann der Fall, wenn sich die Koppelstange 3 mit ihrem Endabschnitt nicht mehr innerhalb der Einschnürung 43 des Durchganges 41 befindet. Zur Begrenzung des Verstellweges ist der zuletzt genannten Weise könnten auch weitere Ringe an den äußeren Enden der Koppelstange 3 vorgesehen sein, wobei der Durchmesser des Ringes auf dem dem Befestigungsstück 4 zugewandten Ende der Koppelstange 3 so bemessen sein sollte, dass er kleiner ist als der Innendurchmesser der äußeren Abschnitte 42 des Durchganges 41, jedoch größer als der Innendurchmesser der Einschnürung 43. In diesem Fall würde der Ring bei dem Versuch, die Koppelstange 3 vollständig durch die Einschnürung 43 hindurchzuziehen, an einem Anschlag 44 zur Anlage kommen, der am Übergang der Einschnürung 43 zu dem entsprechenden äußeren Abschnitt 42 des Durchganges 41 gebildet ist. Es bestünde bei dieser Variante aber das Problem, dass der Ring erst nach dem Aufschieben des Befestigungsstückes 4 auf die Koppelstange 3 an dieser befestigt werden dürfte. Hierdurch würde die Flexibilität beim Einbau des Wegmesssystems in eine Werkzeugmaschine verringert. Aus diesem Grunde sind für die letztgenannte Anwendung Markierungen vorzuziehen.

In Fällen, in denen der Abstand zwischen der Verbindungsplatte 25 und dem Befestigungsstück 4 besonders groß ist, kann im mittleren Abschnitt 30 der Koppelstange 3 ein verstärkter Bereich vorgesehen sein, der die Biegsamkeit der Koppelstange 3 begrenzt.

Die erfindungsgemäß vorgesehenen Schiebeführungen 3, 40 bzw. 3, 50 zur Einstellung der effektiven Länge der Koppelstange 3 haben nicht nur den Vorteil, dass sie besonders einfach aufgebaut und daher kostengünstig herstellbar sind, sondern auch dass sie nur eine geringe Ausdehnung quer zur Erstreckungsrichtung des Maßstabes 10 (Verschieberichtung V) aufweisen. Dadurch kann die Koppelstange 3 sehr dicht neben dem Trägerkörper 1 in unmittelbarer Nähe zum Maßstab 10 angeordnet werden. Somit ist auch der Abstand zwischen der Koppelstange 3 und der Führungseinrichtung 12 entsprechend klein, so dass Messfehler aufgrund von Spiel verursachenden Toleranzen (der quer zur Messrichtung V möglichst spielfrei mit dem Gleiter 27 der Verbindungsplatte 25 zusammenwirkenden) Führungseinrichtung 12 minimiert werden können. Denn der Abstand zwischen Koppelstange 3 und Führungseinrichtung 12 quer zur Messrichtung V wirkt als Hebelarm zur Wandlung einer Kippbewegung des Gleiters 27 quer zur Messrichtung V in eine Bewegung entlang der Messrichtung V.

## Patentansprüche

1. Wegmesssystem zur Erfassung der Lage zweier relativ zueinander beweglicher Bauteile, insbesondere Maschinenteile, mit
- einem eine Messteilung aufweisenden Maßstab (10) an einem Trägerkörper (1), der einem ersten der beiden Bauteile zugeordnet ist, wobei die Messteilung eine Messrichtung (V) definiert,
- einer Abtasteinrichtung zur Abtastung der Messteilung (10), die dem zweiten der beiden Bauteile zugeordnet ist,
- einer an dem Trägerkörper (1) vorgesehenen Führungseinrichtung (12), mit der die Abtasteinrichtung (2) verschieblich entlang der Messteilung in Messrichtung (V) geführt ist,
- einem längserstreckten Koppelelement (3), über das die Abtasteinrichtung (2) mit dem zweiten Bauteil verbindbar ist, und
- einer Längsverstellung zur Anpassung der effektiven Länge des Koppelelementes (3) an die Lage des zweiten Bauteiles bezüglich der Abtasteinrichtung (2),
**dadurch gekennzeichnet,**
**dass** das Koppelelement eine in Messrichtung (V) längserstreckte längssteife und quer zur Messrichtung (V) biegbar ausgebildete Koppelstange (3) ist, durch die die Abtasteinrichtung (2) gelenkig mit dem zweiten Bauteil verbindbar ist, und
**dass** die Längsverstellung eine Schiebeführung (3, 40; 3, 50) mit zwei in Erstreckungsrichtung (L) des Koppelelementes (3) zueinander verschieblichen und nach einem Verschieben aneinander fixierbaren Führungselementen (3, 40, 50) aufweist.

2. Wegmesssystem nach Anspruch 1, **dadurch gekennzeichnet, dass** die Führungselemente (3, 40, 50) durch eine Klemmverbindung fixierbar sind.

3. Wegmesssystem nach Anspruch 2, **dadurch gekennzeichnet, dass** die Schiebeführung (3, 40; 3, 50) ein Klemmelement, insbesondere in Form einer Schraube (28, 48) oder eines Exzenters, aufweist, das zur Herstellung der Klemmverbindung auf eines der Führungselemente (3, 40, 50) einwirken kann.

4. Wegmesssystem nach Anspruch 2 oder 3, **dadurch gekennzeichnet, dass** die Schiebeführung (3, 40; 3, 50) einen elastisch ausgebildeten Abschnitt umfasst, der zur Herstellung der Klemmverbindung deformierbar ist.

5. Wegmesssystem nach Anspruch 4, **dadurch gekennzeichnet, dass** die Schiebeführung (3, 40; 3, 50) eine Stellschraube (28, 48) aufweist, mittels der der elastisch ausgebildete Abschnitt deformierbar ist.

6. Wegmesssystem nach Anspruch 4 oder 5, **dadurch gekennzeichnet, dass** eines der Führungselemente (40, 50) das andere Führungselement (3) mit einem elastisch deformierbaren Abschnitt umgreift.

7. Wegmesssystem nach einem der vorhergehenden Ansprüche, **dadurch gekennzeichnet, dass** eines der Führungselemente (40, 50) einen Durchgang (41, 51) aufweist, in dem das andere Führungselement (3) geführt ist.

8. Wegmesssystem nach Anspruch 6 und 7, **dadurch gekennzeichnet, dass** das eine Führungselement (40, 50) mit einem sich bis zu dem Durchgang (41, 51) erstreckenden Schlitz (45, 55) versehen ist, so dass durch Deformation des einen Führungselementes (40, 50) im Bereich des Schlitzes (45, 55) der Querschnitt des Durchganges (41, 51) veränderbar ist.

9. Wegmesssystem nach einem der vorhergehenden Ansprüche, **dadurch gekennzeichnet, dass** eines der Führungselemente (3) durch das längserstreckte Koppelelement (3) gebildet wird, das als Koppelstange ausgebildet ist.

10. Wegmesssystem nach einem der vorhergehenden Ansprüche, **dadurch gekennzeichnet, dass** zumindest eines der Führungselemente (3) Markierungen aufweist, anhand derer die Lage der beiden Führungselemente (3, 40, 50) zueinander bestimmbar ist.

11. Wegmesssystem nach einem der vorhergehenden Ansprüche, **dadurch gekennzeichnet, dass** zumindest eines der Führungselemente (3) mindestens einen Anschlag (31, 32) aufweist, durch den der Verschiebeweg der beiden Führungselemente (3, 40, 50) zueinander begrenzt wird.

12. Wegmesssystem nach einem der vorhergehenden Ansprüche, **dadurch gekennzeichnet, dass** zwei Schiebeführungen (3, 40; 3, 50) vorgesehen sind, wobei das längserstreckte Koppelelement (3) über eine Schiebeführung (3, 50) mit der Abtasteinrichtung (2) und über die andere Schiebeführung (3, 40) mit dem zweiten Bauteil verbindbar ist.

## Claims

1. Displacement measuring system for detecting the position of two components which are moveable relative to each other, in particular machine parts, having
- a scale (10) which has a measuring division on a support body (1) which is assigned to a first of the two components, the measuring division defining a measuring direction (V),
- a scanning device for scanning the measuring division (10) which is assigned to the second of the two components,
- a guide device (12) which is provided on the support body (1) and with which the scanning device (2) is guided displaceably along the measuring division in the measuring direction (V),
- a longitudinally extended coupling element (3), via which the scanning device (2) can be connected to the second component, and
- a longitudinal adjustment for adapting the effective length of the coupling element (3) to the position of the second component relative to the scanning device (2),
**characterised in that**
the coupling element is a coupling rod (3) having a configuration which is extended longitudinally in the measuring direction (V), is longitudinally rigid and flexible transversely relative to the measuring direction (V), and by means of which coupling rod the scanning device (2) can be connected in an articulated manner to the second component, and
**in that** the longitudinal adjustment has a sliding guide (3, 40; 3, 50) having two guide elements (3, 40, 50) which can be displaced relative to each other in the extension direction (L) of the coupling element (3) and can be fixed onto each other after a displacement.

2. Displacement measuring system according to claim 1, **characterised in that** the guide elements (3, 40, 50) can be fixed by means of a clamping connection.

3. Displacement measuring system according to claim 2, **characterised in that** the sliding guide (3, 40; 3, 50) has a clamping element, in particular in the form of a screw (28, 48) or an eccentric which can act on one of the guide elements (3, 40, 50) in order to produce the clamping connection.

4. Displacement measuring system according to claim 2 or 3, **characterised in that** the sliding guide (3, 40; 3, 50) includes an elastically configured portion which is deformable in order to produce the clamping connection.

5. Displacement measuring system according to claim 4, **characterised in that** the sliding guide (3, 40; 3, 50) has an adjustment screw (28, 48) by means of which the elastically configured portion is deformable.

6. Displacement measuring system according to claim 4 or 5, **characterised in that** one of the guide elements (40, 50) engages around the other guide element (3) with an elastically deformable portion.

7. Displacement measuring system according to one of the preceding claims, **characterised in that** one of the guide elements (40, 50) has a passage (41, 51) in which the other guide element (3) is guided.

8. Displacement measuring system according to claim 6 and 7, **characterised in that** the one guide element (40, 50) is provided with a slot (45, 55) which extends up to the passage (41, 51) so that, by means of deformation of the one guide element (40, 50) in the region of the slot (45, 55), the cross-section of the passage (41, 51) can be changed.

9. Displacement measuring system according to one of the preceding claims, **characterised in that** one of the guide elements (3) is formed by the longitudinally extended coupling element (3) which is configured as the coupling rod.

10. Displacement measuring system according to one of the preceding claims, **characterised in that** at least one of the guide elements (3) has markings, by means of which the position of the two guide elements (3, 40, 50) relative to each other can be determined.

11. Displacement measuring system according to one of the preceding claims, **characterised in that** at least one of the guide elements (3) has at least one limit stop (31, 32), by means of which the displacement path of the two guide elements (3, 40, 50) relative to each other is delimited.

12. Displacement measuring system according to one of the preceding claims, **characterised in that** two sliding guides (3, 40; 3, 50) are provided, the longitudinally extended coupling element (3) being able to be connected to the scanning device (2) via a sliding guide (3, 50) and to the second component via the other sliding guide (3, 40).

## Revendications

1. Système de mesure de déplacement pour saisir la position de deux composants mobiles l'un par rapport à l'autre, notamment de parties de machine, dans lequel :
- une règle de mesure (10) portant une graduation de mesure est montée sur un support (1) qui est associé à un (premier) composant, la graduation de mesure définissant la direction de mesure (V),
- un dispositif d'exploration, associé à l'autre (second) composant, sert à explorer la graduation de mesure (10),
- sur le support (1) est prévu un dispositif de guidage (12) par lequel le dispositif d'exploration (2) est guidé de manière à coulisser le long de la graduation de mesure selon la direction de mesure (V),
- un élément d'accouplement (3) longitudinal permet de relier le dispositif d'exploration (2) au second composant,
- un coulissement longitudinal permet d'adapter la longueur effective de l'élément d'accouplement (3) à la position du second composant par rapport au dispositif d'exploration (2),
ce système présentant les caractéristiques suivantes :
- l'élément d'accouplement est une tige d'accouplement (3) s'étendant selon la direction de mesure (V), rigide longitudinalement mais flexible perpendiculairement à la direction de mesure (V), et qui est articulée au second composant par le dispositif d'exploration (2),
- le déplacement longitudinal présente un guidage coulissant (3, 40 ; 3, 50) comprenant deux éléments de guidage (3, 40 ; 3, 50) qui peuvent coulisser l'un par rapport à l'autre selon la direction longitudinale (L) de l'élément d'accouplement (3) et être fixés l'un à l'autre après coulissement.

2. Système de mesure de déplacement selon la revendication 1, **caractérisé en ce que** les éléments de guidage (3, 40 ; 3, 50) peuvent être fixés au moyen d'une liaison par serrage.

3. Système de mesure de déplacement selon la revendication 2, **caractérisé en ce que** le guidage coulissant (3, 40 ; 3, 50) présente un élément de serrage, notamment sous la forme d'une vis (28, 48) ou d'un excentrique, pour agir de manière à établir une liaison de serrage sur un des éléments de guidage (3, 40 ; 3, 50).

4. Système de mesure de déplacement selon la revendication 2 ou 3, **caractérisé en ce que** le guidage coulissant (3, 40 ; 3, 50) comprend une partie à configuration élastique, pouvant se déformer pour établir une liaison par serrage.

5. Système de mesure de déplacement selon la revendication 4, **caractérisé en ce que** le guidage coulissant (3, 40 ; 3, 50) présente une vis de réglage par laquelle peut être déformée la partie à configuration élastique.

6. Système de mesure de déplacement selon la revendication 1, **caractérisé en ce qu'**un élément de guidage (40, 50) enveloppe l'autre élément de guidage (3) par une partie déformable élastiquement.

7. Système de mesure de déplacement selon une des revendications précédentes, **caractérisé en ce qu'**un des éléments de guidage (40, 50) présente un passage (41, 51) dans lequel est guidé l'autre élément de guidage (3).

8. Système de mesure de déplacement selon la revendication 6 ou 7, **caractérisé en ce qu'**un élément de guidage (40, 50) présente une fente (42, 55) allant jusqu'au passage (41, 51) de sorte que la section de passage (41, 51) peut être modifiée par déformation d'un élément de guidage (40, 50) dans la zone de la fente (45,55).

9. Système de mesure de déplacement selon une des revendications précédentes, **caractérisé en ce qu'**un des éléments de guidage (3) est constitué par un élément d'accouplement (3) allongé, sous la forme d'une tige d'accouplement.

10. Système de mesure de déplacement selon une des revendications précédentes, **caractérisé en ce qu'**au moins un des éléments de guidage (3) présente des marques à l'aide desquelles peut être déterminée la position des deux éléments de guidage (3, 40 ; 3, 50) l'un par rapport à l'autre.

11. Système de mesure de déplacement selon une des revendications précédentes, **caractérisé en ce qu'**au moins un des éléments de guidage (3) présente au moins une butée (31, 32) par laquelle est limitée la course de déplacement l'un par rapport à l'autre, des deux éléments de guidage (3, 40 ; 3, 50).

12. Système de mesure de déplacement selon une des revendications précédentes, **caractérisé en ce qu'**il est prévu deux guidages coulissants (3, 40 ; 3, 50) et l'élément d'accouplement allongé (3) peut être relié par un guidage coulissant (3, 50) au dispositif d'exploration (2) et par l'autre guidage coulissant (3, 40) au second composant.
